# EUROPÄISCHE PATENTANMELDUNG

(11) **EP 1 339 159 A2**
(43) Veröffentlichungstag der Anmeldung: **27.08.2003**
(21) Anmeldenummer: 03001506.9
(22) Anmeldetag: 23.01.2003
(51) Int. Cl.: H02K 11/00, H02K 9/19

(54) **Antriebssystem für ein Kraftfahrzeug mit einer elektrischen Maschine**

(30) Priorität: 22.02.2002 DE 10207486
(71) Anmelder: DaimlerChrysler AG, 70567 Stuttgart (DE)
(72) Erfinder: Bitsche, Otmar, 70329 Stuttgart (DE); Schäfer, Uwe, Dr., 70378 Stuttgart (DE); Tadros, Yehia, Dr., 70327 Stuttgart (DE)

(57) **Zusammenfassung**

Die Erfindung betrifft ein Antriebssystem für ein Verkehrsmittel mit einer elektrischen Maschine , wobei der elektrischen Maschine eine Umrichtereinheit und eine Kühleinheit zugeordnet sind, wobei die Umrichtereinheit wenigstens teilweise ringförmig ausgeführt ist und die elektrische Maschine bzw. Bestandteile der elektrischen Maschine umgibt.

## Beschreibung

Die Erfindung betrifft ein Antriebssystem für ein Verkehrsmittel mit den Merkmalen des Oberbegriffs des Anspruchs 1.

Aus der Offenlegungsschrift DE 33 32 515 A1 ist eine elektrische Maschine bekannt, der ein Stromrichtergerät zur Ansteuerung zugeordnet ist. Das Stromrichtergerät ist in einem Klemmenkasten auf einer planebenen Kontaktfläche eingebaut. Der Klemmenkasten ist in der Gehäusewand der elektrischen Maschine vorgesehen.

Aus der JP 04-000242 A (Patent Abstracts of Japan) ist ein Motor bekannt, bei dem eine Motorelektronik integriert ist. Zwischen der Motorelektronik und dem Motor ist ein Kühlsystem bestehend aus einem Tank und zwei Leitungen für die Kühlflüssigkeit vorgesehen.

In üblichen Antriebssystemen für Fahrzeuge steht wenig Platz zur Verfügung, so dass der Einbau weiterer Komponenten meist teure Umkonstruktionen erfordert.

Aufgabe der Erfindung ist es, ein Antriebssystem mit möglichst geringem Bauraumbedarf zur Verfügung zu stellen.

Diese Aufgabe wird durch ein Antriebssystem mit den Merkmalen des Anspruchs 1 gelöst.

Das erfindungsgemäße Antriebssystem zeichnet sich dadurch aus, dass Umrichtereinheit und elektrische Maschine bauraumsparend integriert sind. Hierdurch können Verbindungsteile eingespart werden. Weiterhin ist nur eine Kühleinheit vorgesehen, die sowohl der Kühlung der Umrichtereinheit als auch der Kühlung der elektrischen Maschine dient. Dadurch können vorteilhafterweise mehrfache Kühlkreisläufe vermieden und Komponenten eingespart werden. Dies wirkt sich vorteilhaft auf Gewicht, Bauraumbedarf und Kosten aus. Die integrierte Bauweise führt weiterhin zu einer Verbesserung der elektromagnetischen Verträglichkeit. Dies ist in modernen Fahrzeug, die üblicherweise eine Vielzahl von elektrischen Komponenten wie beispielsweise Steuergeräten beinhalten, besonders günstig.

Weitere vorteilhafte Ausgestaltungen der Erfindung ergeben sich aus den Unteransprüchen und aus den anhand der Zeichnung nachfolgend dargestellten Ausführungsbeispielen. Es zeigen:
- Fig. 1: eine schematische Darstellung einer bevorzugten Anordnung einer Umrichtereinheit eines erfindungsgemäßen Antriebssystems und
- Fig. 2: eine schematische Detailansicht eines Längsschnitts einer ersten (a), einer zweiten (b) und einer dritten (c) Ausführungsform eines erfindungsgemäßen Antriebssystems.

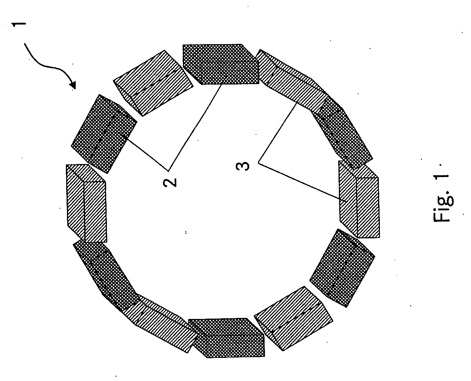

In Figur 1 ist schematisch eine bevorzugte Anordnung einer Umrichtereinheit 1 eines erfindungsgemäßen Antriebssystems dargestellt. Die Umrichtereinheit 1 enthält eine typische, nicht dargestellte Leistungselektronik zur Ansteuerung einer nicht dargestellten elektrischen Maschine. Diese Leistungselektronik umfasst, wie allgemein üblich, Halbbrücken bzw. Halbbrückenanordnungen, wobei jeder Phase der elektrischen Maschine eine Halbbrücke bzw. eine Halbbrückenanordnung zugeordnet ist. Die Halbbrückenanordnungen werden über einen nicht dargestellten Zwischenkreis mit elektrischer Energie von einer nicht dargestellten Spannungsquelle und/oder Stromquelle versorgt. Als Spannungsquelle kann beispielsweise eine Traktionsbatterie, ein SuperCap, oder auch ein durch einen Verbrennungsmotor angetriebener Generator eingesetzt werden. Jede Halbbrückenanordnung umfasst üblicherweise zwei nicht dargestellte Schaltelemente, die in Serie zueinander geschaltet sind. Als Schaltelemente werden bevorzugterweise Leistungshalbleiter, wie IGBTs, MOSFET und/oder Thyristoren wie beispielsweise GTOs (Gate Turn-off Thyristor) eingesetzt. Es können auch Relais eingesetzt werden. Die nicht dargestellten Phasen der elektrischen Maschine werden üblicherweise zwischen den Schaltelementen mittels nicht dargestellter Leitungen angeschlossen. Den Schaltelementen sind nicht dargestellte Dioden, sogenannte Freilaufdioden bzw. Rückstromdioden, zugeordnet, die in üblicher Weise antiparallel zu den Schaltelementen angeordnet sind. Unter antiparallel versteht man, daß die Stromdurchflußrichtung der Dioden entgegengesetzt der bevorzugten Stromdurchflußrichtung der Schaltelemente ist. Die Schaltelemente werden typischerweise über ein nicht dargestelltes Ansteuersystem, beispielsweise ein Steuergerät, angesteuert. Die Ansteuerung erfolgt üblicherweise mit pulsweitenmodulierten Taktungssignalen, wobei über die Pulsweite die Strom- und/oder Drehzahlregelung der elektrischen Maschine erfolgen kann.

Die Umrichtereinheit 1 ist, wie in Figur 1 dargestellt, vorzugsweise ringförmig ausgeführt. Die Umrichtereinheit 1 kann, wenn dies beispielweise aus bauraumspezifischen Gründen zweckmäßig erscheint, auch teilweise ringförmig ausgebildet sein. Unter ringförmig bzw. teilweise ringförmig wird verstanden, daß die Umrichtereinheit 1 auf einem Kreis bzw. einem Kreisbogen angeordnet ist. Das heisst, dass die Umrichtereinheit 1 als ein ringförmiges oder teilweise ringförmiges Modul bzw. Bauteil ausgeführt sein kann. Alternativ kann die Umrichtereinheit 1 auch aus mehreren, beispielsweise rechteckigen bzw. quaderförmigen Modulen 2, 3 bestehen, die kreisförmig bzw. kreisbogenförmig angeordnet sind. Dies ist bei der in Figur 1 dargestellten Ausführungsform der Fall. Die einzelnen Umrichtermodule 2, 3 können formschlüssig miteinander verbunden sein. Sie können jedoch auch mittelbar, beispielsweise über nicht dargestellte Leitungen, verbunden sein. Die Umrichtermodule 2, 3 sind vorzugsweise quaderförmig.

Die Umrichtereinheit 1 kann auch oval bzw. ellipsenförmig ausgeführt sein bzw. sie kann auf einem Oval bzw. einer Ellipse oder einem Teil eines Ovals bzw. einer Ellipse angeordnet sein, falls dies aus Gründen der Verbauung erforderlich sein sollte. Sie kann beispielsweise aus Modulen 2, 3 bestehen, die ovalförmig bzw. ellipsenförmig angeordnet sind.

Die Umrichtereinheit umfasst vorzugsweise wenigstens ein erstes Umrichtermodul 2 und wenigstens ein zweites Umrichtermodul 3. Jedes Umrichtermodul 2, 3 weist bevorzugterweise ein Halbleiterelement bzw. einen sogenannten Halbleiterchip auf. Das erste Umrichtermodul 2 enthält ein nicht dargestelltes Schaltelement, beispielsweise einen IGBT, und vorteilhafterweise eine nicht dargestellte, sogenannte Freilaufdiode, die antiparallel zu den Schaltelementen angeordnet ist. Das zweite Umrichtermodul 3 umfasst vorzugsweise einen nicht dargestellten Energiespeicher und/oder eine nicht dargestellte Kapazität, vorzugsweise einen Zwischenkreiskondensator. Die Kapazität dient der Glättung der am Zwischenkreis anliegenden Signale, insbesondere des Stroms und der Spannung. Als Kondensator kann ein Elektrolytkondensator eingesetzt werden. Es kann auch ein Schichtstapelkondensator, bzw. ein Kondensator der in Schichtstapeltechnologie gefertigt wurde, verwendet werden.

Jede Phase der elektrischen Maschine ist vorzugsweise mit zwei ersten Umrichtermodulen 2 verbunden, deren Schaltelemente als Halbbrücke verschaltet sind. Bei mehrstufigen Umrichterschaltungen können einer Phase auch mehrere erste Umrichtermodule 2 zugeordnet sein. Des weiteren sind jeder Phase der elektrischen Maschine vorzugsweise zwei zweite Umrichtermodule 3 zugeordnet. Die ersten 2 und zweiten Umrichtermodule 3 bilden den Ring bzw. die teilweise Ringform der Umrichtereinheit 1 und sind bevorzugterweise abwechselnd angeordnet. Dies führt zu kurzen Verbindungen zwischen den ersten 2 und den zweiten Umrichtermodulen 3 und daher zu geringer (Leitungs-)Induktivität.

In einer bevorzugten Ausführungsform sind bei einer dreiphasigen Maschine insgesamt sechs erste Umrichtermodule 2 und sechs zweite Umrichtermodule 3 vorgesehen, wobei die ersten 2 und die zweiten Umrichtermodule 3 alternierend angeordnet sind. Für elektrische Maschinen mit mehr bzw. weniger Phasen wird die Anzahl der ersten und zweiten Umrichtermodule 2, 3 entsprechend angepasst.

Wegen der Ringform bzw. teilweisen Ringform der Umrichtereinheit 1 kann diese geschickt an einer elektrischen Maschine angeordnet werden, da diese üblicherweise zylinderförmige Bauelemente, beispielsweise Läuferblechpaket und Ständerblechpaket, aufweist.

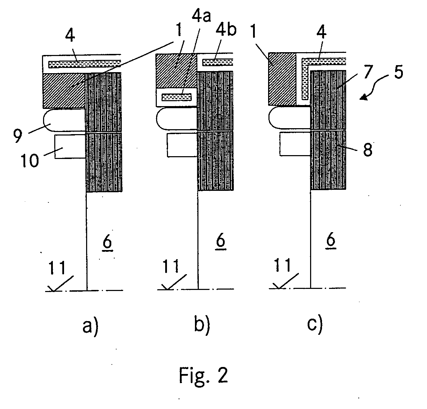

In Figur 2 ist schematisch ein Teil eines Längsschnitts einer ersten (a), einer zweiten (b) und einer dritten (c) Ausführungsform eines erfindungsgemäßen Antriebssystems mit einer elektrischen Maschine dargestellt. Gleiche Bezugszeichen kennzeichnen gleiche Komponenten. Der oberhalb einer Achse 11 angeordnete Teil ist symmetrisch zu einem nicht dargestellten, unterhalb der Achse 11 angeordneten Teil. Als elektrische Maschine kann beispielsweise eine Asynchronmaschine verwendet werden. Die elektrische Maschine besteht aus einem Ständer 5 mit einem Ständerblechpaket 7 und einem Wickelkopf 9 und aus einem Läufer 6 mit einem Läuferblechpaket 8 und einem Kurzschlussring 10. Des weiteren weist das Antriebssystem eine Kühleinheit 4 auf. Die Kühleinheit 4 kann Kühlung mit flüssigem Kühlmittel, beispielsweise Wasser oder Öl, und/oder gasförmigem Kühlmittel, beispielsweise Umgebungsluft, vorsehen. Im Längsschnitt ragen Wickelkopf 9 und Kurzschlussring 10 seitlich über das Ständerblechpaket 7 bzw. das Läuferblechpaket 8 hinaus.

Figur 2 a) stellt eine erste bevorzugte Ausführungsform dar, bei der die Umrichtereinheit 1 den überstehenden bzw. hinausragenden Teil des Wickelkopfs 9 des Ständers 5 ringförmig bzw. teilweise ringförmig umschließt und neben dem Ständerblechpaket 7, vorzugsweise formschlüssig, angeordnet ist. Bevorzugterweise bildet der von der Achse 11 am weitesten außenliegende Teil der Umrichtereinheit 1 mit dem Ständerblechpaket 7 eine parallel zur Achse 11 verlaufende Gerade, das heisst, die Umrichtereinheit 1 schließt vorzugsweise mit dem Ständerblechpaket 7 ab. Die Kühleinheit 4 ist als vorzugsweise zylindrischer Kühlmantel ausgebildet, der das Ständerblechpaket 7 und die Umrichtereinheit 1 wenigstens teilweise ringförmig umschließt. Vorzugsweise schließen Umrichtereinheit 1, Kühleinheit 4 und Wickelkopf 9 miteinander ab, das heisst, sie bilden vorzugsweise eine Gerade senkrecht zur Achse 11.

Diese Ausführungsform zeichnet sich durch eine einfache Konstruktion, eine hohe thermische Belastbarkeit und kurze Verbindungen zwischen Umrichtereinheit 1 und elektrischer Maschine aus.

Figur 2 b) stellt eine zweite bevorzugte Ausführungsform dar, bei der eine erste Kühleinheit 4a und eine zweite Kühleinheit 4b vorgesehen sind. Die erste Kühleinheit 4a ist vorzugsweise als zylindrischer Kühlmantel ausgebildet und umschließt den überstehenden bzw. hinausragenden Teil des Wickelkopfs 9 des Ständers 5 ringförmig oder teilweise ringförmig. Sie ist, vorzugsweise formschlüssig, neben dem Ständerblechpaket 7 angeordnet. Die Umrichtereinheit 1 wiederum umschließt die Kühlmitteleinheit 4a ringförmig oder teilweise ringförmig. Die Kühleinheit 4b ist ebenfalls vorzugsweise als zylindrischer Kühlmantel ausgebildet, der das Ständerblechpaket 7 wenigstens teilweise ringförmig umschließt. Bevorzugterweise bildet der von der Achse 11 am weitesten außenliegende Teil der Umrichtereinheit 1 mit der Kühlmitteleinheit 4b eine parallel zur Achse 11 verlaufende Gerade, das heisst, die Umrichtereinheit 1 schließt vorzugsweise mit der Kühleinheit 4b ab. Vorzugsweise schließen Umrichtereinheit 1, Kühleinheit 4a und Wickelkopf 9 miteinander ab, das heisst, sie bilden vorzugsweise eine Gerade senkrecht zur Achse 11.

Diese Ausführungsform zeichnet sich durch eine gute Kühlung der Umrichtereinheit 1 und der elektrischen Maschine aus.

In Figur 2 c) ist eine bevorzugte dritte Ausführungsform dargestellt, bei der die Kühleinheit 4 das Ständerblechpaket 7 ringförmig oder teilweise ringförmig umschließt. Die Kühleinheit 4 ist dergestalt ausgeführt, dass sie die Stirnseite des Ständerblechpakets 7 ebenfalls einschließt. Vorzugsweise knickt die Kühleinheit 4 am stirnseitigen Ende des Ständerblechpakets 7 um und bedeckt das Kühlmittelpaket 7 bis die Kühleinheit 4 an den Wickelkopf 9 anstößt. Die Umrichtereinheit 1 umschließt den überstehenden bzw. hinausragenden Teil des Wickelkopfs 9 des Ständers 5 ringförmig bzw. teilweise ringförmig und ist, vorzugsweise formschlüssig, neben dem umgeknickten Teil der Kühleinheit 4 angeordnet.

Diese Ausführungsform zeichnet sich durch einen einfachen Aufbau und eine gute Kühlung der elektrischen Maschine und der Umrichtereinheit 1 aus.

In einer weiteren nicht dargestellten Ausführungsform ist die Umrichtereinheit 1 auf einer Stirnseite der elektrischen Maschine angeordnet. Die Kühleinheit oder ein Teil der Kühleinheit 4 ragt bei dieser Ausführungsform über den Ständer 5 hinaus, beispielsweise durch eine weitere Umknickung der in Figur 2 c) dargestellten Kühleinheit in Längsrichtung, und ist mit der Umrichtereinheit 1, vorzugsweise formschlüssig, verbunden.

Bevorzugterweise sind Umrichtereinheit 1 und Kühleinheit 4, 4a, 4b auf jeder Stirnseite der elektrischen Maschine in symmetrischer Bauform angeordnet.

Die elektrische Maschine, die Umrichtereinheit 1 und die Kühleinheit 4, 4a, 4b sind vorzugsweise in einem gemeinsamen Gehäuse angeordnet.

Das erfindungsgemäße Antriebssystem kann als Starter-Generator, als Motor-Generator, aber auch nur als Motor, Starter oder Generator eingesetzt werden. Es kann in einem verbrennungsmotorisch angetriebenen Fahrzeug, einem Brennstoffzellenfahrzeug, einem Hybridfahrzeug, einem Elektrofahrzeug, einem Batteriefahrzeug eingesetzt werden. Das Antriebssystem kann als Haupt- oder als Hilfsantrieb verwendet werden.

Das erfindungsgemäße Antriebssystem ist in einem Fahrzeug vorzugsweise zwischen einer Brennkraftmaschine und einem Getriebe angeordnet. Kupplungen bzw. Wandler können zwischen dem Getriebe und dem Antriebssystem und der Brennkraftmaschine und dem Antriebssystem angeordnet sein. Bolzen, die der starren Verbindung der Brennkraftmaschine und dem Getriebe üblicherweise dienen, können durch die Umrichtereinheit 1 hindurchgeführt werden. Alternativ können die Bolzen außerhalb des Umfangs des Antriebssystems angeordnet sein.

## Patentansprüche

1. Antriebssystem für ein Verkehrsmittel mit einer elektrischen Maschine , wobei der elektrischen Maschine eine Umrichtereinheit (1) und eine Kühleinheit (4, 4a) zugeordnet sind,
**dadurch gekennzeichnet, dass** die Umrichtereinheit (1) wenigstens teilweise ringförmig ausgeführt ist.

2. Antriebssystem nach Anspruch 1,
**dadurch gekennzeichnet, dass** die Umrichtereinheit (1) formschlüssig mit der Kühleinheit (4) verbunden ist.

3. Antriebssystem nach Anspruch 1,
**dadurch gekennzeichnet, dass** die Umrichtereinheit (1) formschlüssig mit der elektrischen Maschine verbunden ist.

4. Antriebssystem nach Anspruch 3,
**dadurch gekennzeichnet, dass** die Umrichtereinheit (1) formschlüssig mit einem Ständer (5) der elektrischen Maschine verbunden ist.

5. Antriebssystem nach Anspruch 1,
**dadurch gekennzeichnet, dass** die Umrichtereinheit (1) die elektrische Maschine oder einen Bestandteil der elektrischen Maschine wenigstens teilweise umgibt.

6. Antriebssystem nach Anspruch 1,
**dadurch gekennzeichnet, dass** die Umrichtereinheit (1) auf einer Stirnseite der elektrischen Maschine angeordnet ist.

7. Antriebssystem nach Anspruch 1,
**dadurch gekennzeichnet, dass** die Umrichtereinheit (1) ein erstes Umrichtermodul (2) und ein zweites Umrichtermodul (3) umfasst.

8. Antriebssystem nach Anspruch 7,
**dadurch gekennzeichnet, dass** das erste (2) und/oder das zweite Umrichtermodul (3) quaderförmig ausgeführt sind.

9. Antriebssystem nach Anspruch 7,
**dadurch gekennzeichnet, dass** das erste Umrichtermodul (2) ein Schaltelement aufweist.

10. Antriebssystem nach Anspruch 9,
**dadurch gekennzeichnet, dass** das erste Umrichtermodul (2) einen Gleichrichter aufweist.

11. Antriebssystem nach Anspruch 7,
**dadurch gekennzeichnet, dass** das zweite Umrichtermodul (3) einen Energiespeicher aufweist.

12. Antriebssystem nach Anspruch 7,
**dadurch gekennzeichnet, dass** das zweite Umrichtermodul (3) eine Kapazität aufweist.

13. Antriebssystem nach Anspruch 7,
**dadurch gekennzeichnet, dass** jeder Phase der elektrischen Maschine zwei erste (2) und/oder zwei zweite (3) Umrichtermodule zugeordnet sind.

14. Antriebssystem nach Anspruch 1,
**dadurch gekennzeichnet, dass** die Kühleinheit (4, 4a) als die elektrische Maschine oder Bestandteile der elektrischen Maschine entlang eines Umfangs der elektrischen Maschine wenigstens teilweise umgebender Kühlmantel ausgebildet ist.

15. Antriebssystem nach Anspruch 14,
**dadurch gekennzeichnet, dass** die Kühleinheit (4) die Umrichtereinheit (1) entlang eines Umfangs der Umrichtereinheit (1) wenigstens teilweise umgibt.

16. Antriebssystem nach Anspruch 15,
**dadurch gekennzeichnet, dass** die Umrichtereinheit (1) zwischen der Kühleinheit (4) und der elektrischer Maschine bzw. einem Bestandteil der elektrischen Maschine angeordnet ist.

17. Antriebssystem nach Anspruch 14,
**dadurch gekennzeichnet, dass** die Kühleinheit (4a) zwischen Umrichtereinheit (1) und elektrischer Maschine angeordnet ist.

18. Antriebssystem nach Anspruch 1,
**dadurch gekennzeichnet, dass** elektrische Maschine, Umrichtereinheit (1) und Kühleinheit (4, 4a, 4b) in einem gemeinsamen Gehäuse angeordnet sind.

19. Antriebssystem nach Anspruch 1,
**dadurch gekennzeichnet, dass** das Antriebssystem in einem Verkehrsmittel mit einer Brennkraftmaschine und einem Getriebe verbunden ist und zwischen der Brennkraftmaschine und dem Getriebe angeordnet ist.
